# EUROPEAN PATENT APPLICATION

(11) **EP 4 661 271 A1**
(43) Date of publication of application: **10.12.2025**
(21) Application number: 25174714.3
(22) Date of filing: 07.05.2025
(51) Int. Cl.: H02M 3/07, H02M 1/00, H02M 3/158

(54) **CASCADED CONVERTER**

(30) Priority: 05.06.2024 US 202463656265 P; 25.10.2024 CN 202411497348
(71) Applicant: DELTA ELECTRONICS, INC., Taoyuan City 320023 (TW)
(72) Inventor: LIN, Hung-Chieh, 320023 Taoyuan City (TW); HSIEH, Yi-Ping, 320023 Taoyuan City (TW); HUANG, Jin-Zhong, 320023 Taoyuan City (TW); HUANG, Hung-Yu, 320023 Taoyuan City (TW)
(74) Representative: 2K Patentanwälte Blasberg Kewitz & Reichel

(57) **Abstract**

A cascaded converter includes four capacitors (C₁, C₂, C₃, C₄), four switches (S₁, S₂, S₃, S₄), a fifth switch (S₅) and a first inductor (L₁), a sixth switch (S₆) and a second inductor (L₂), and a seventh switch (S₇). The four capacitors (C₁, C₂, C₃, C₄) include a first capacitor (C₁), a second capacitor (C₂), a third capacitor (C₃), and a fourth capacitor (C₄) connected in series. The four switches (S₁, S₂, S₃, S₄) include a first switch (S₁), a second switch (S₂), a third switch (S₃), and a fourth switch (S₄). The fifth switch (S₅) and the first inductor (Li) are jointly connected at a sixth node (N₆), and the fifth switch (S₅) is further connected to a first node (N₁) and the first inductor (L₁) is further connected to a fourth node (N₄). The sixth switch (S₆) and the second inductor (L₂) are jointly connected at a seventh node (N₇), and the sixth switch (S₆) is further connected to a third node (N₃) and the second inductor (L₂) is further connected to a fifth node (N₅). The seventh switch (S₇) is connected between the sixth node (N₆) and the seventh node (N₇).

## Description

### BACKGROUND

### Technical Field

The present disclosure relates to a cascaded converter, and more particularly to a cascaded converter with reduced components and simple structure.

### Description of Related Art

The statements in this section merely provide background information related to the present disclosure and do not necessarily constitute prior art.

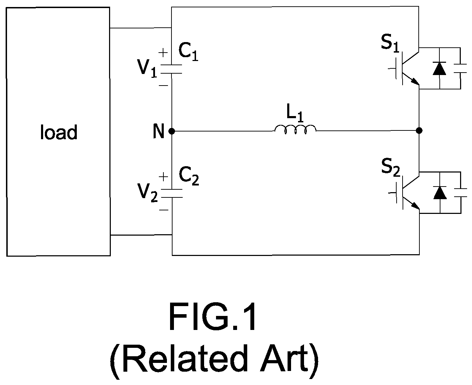

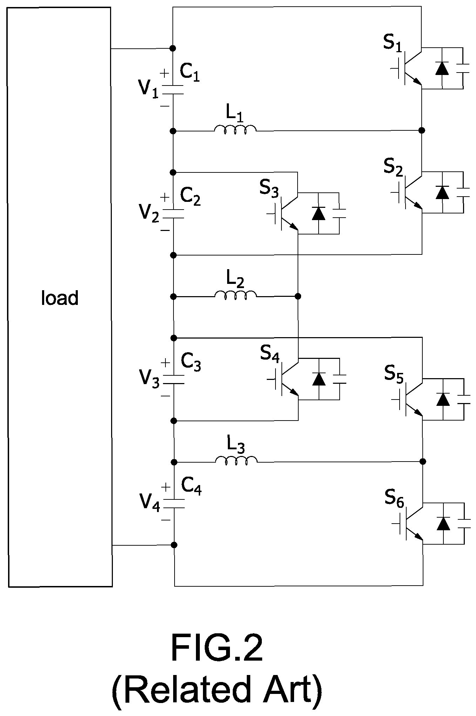

Please refer to FIG. 1, which shows a block circuit diagram of a first embodiment of a conventional dual-capacitor cascaded converter. When two capacitors C₁, C₂ are used, the circuit needs to cooperate at least one inductor L₁ and two switches S₁, S₂. Please refer to FIG. 2, which shows a block circuit diagram of a second embodiment of the conventional dual-capacitor cascaded converter. When four capacitors C₁, C₂, C₃, C₄ are used, since the energy provided by the voltage is not the same, the circuits need to cooperate at least three inductors L₁, L₂, L₃ and six switches S₁, S₂, S₃, S₄, S₅, S₆ to maintain the required voltage level. Since the conventional dual-capacitor cascaded converter contains a large number of components, the circuit size will be too large, the cost will be too high, and the power density will be difficult to increase.

For example, with the rapid development of data centers, as data rapidly expand, the number of servers that need to be installed also increases. In the limited space, it is necessary to reduce the size of the power device (such as but not limited to, the cascaded converter, etc.), and the most effective way to reduce the size is to reduce the number of components. Therefore, how to design a cascaded converter with reduced components and simple structure to solve the problems and technical bottlenecks of too-large circuit size, too-high cost, and power density difficult to increase in the existing technology has become a critical topic in this field.

### SUMMARY

An objective of the present disclosure is to provide a cascaded converter. The cascaded converter includes four capacitors, four switches, a fifth switch and a first inductor, a sixth switch and a second inductor, and a seventh switch. The four capacitors include a first capacitor, a second capacitor, a third capacitor, and a fourth capacitor connected in series. The first capacitor and the second capacitor are jointly connected at a first node, the second capacitor and the third capacitor are jointly connected at a second node, the third capacitor and the fourth capacitor are jointly connected at a third node, and the first capacitor is further connected to a first voltage node, and the fourth capacitor is further connected to a second voltage node. The four switches include a first switch, a second switch, a third switch, and a fourth switch connected in series. The first switch and the second switch are jointly connected at a fourth node, the second switch and the third switch are jointly connected at the second node, the third switch and the fourth switch are jointly connected at a fifth node, and the first switch is further connected to the first voltage node, and the fourth switch is further connected to the second voltage node. The fifth switch and the first inductor are jointly connected at a sixth node, and the fifth switch is further connected to the first node, the first inductor is further connected to the fourth node. The sixth switch and the second inductor are jointly connected at a seventh node, and the sixth switch is further connected to the third node, the second inductor is further connected to the fifth node. The seventh switch is connected between the sixth node and the seventh node.

Another objective of the present disclosure is to provide a cascaded converter. The cascaded converter includes four capacitors, four switches, a fifth switch and a first inductor, a sixth switch and a second inductor, and a diode. The four capacitors include a first capacitor, a second capacitor, a third capacitor, and a fourth capacitor connected in series. The first capacitor and the second capacitor are jointly connected at a first node, the second capacitor and the third capacitor are jointly connected at a second node, the third capacitor and the fourth capacitor are jointly connected at a third node, and the first capacitor is further connected to a first voltage node, and the fourth capacitor is further connected to a second voltage node. The four switches include a first switch, a second switch, a third switch, and a fourth switch connected in series. The first switch and the second switch are jointly connected at a fourth node, the second switch and the third switch are jointly connected at the second node, the third switch and the fourth switch are jointly connected at a fifth node, and the first switch is further connected to the first voltage node, and the fourth switch is further connected to the second voltage node. The fifth switch and the first inductor are jointly connected at a sixth node, and the fifth switch is further connected to the first node, the first inductor is further connected to the fourth node. The sixth switch and the second inductor are jointly connected at a seventh node, and the sixth switch is further connected to the third node, the second inductor is further connected to the fifth node. The diode includes an anode and a cathode, the cathode is connected to the sixth node, and the anode is connected to the seventh node.

Accordingly, the cascaded converter provided by the present disclosure only requires seven switches and two inductors to control four voltages of four capacitors, and further two inductors are used in parallel to control the capacitor voltages to achieve the advantages of saving component costs, simple structure and saving space. Therefore, compared with the conventional technology, the cascaded converter of the present disclosure has the characteristics of higher power density.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a block circuit diagram of a first embodiment of a conventional dual-capacitor cascaded converter.
FIG. 2 is a block circuit diagram of a second embodiment of the conventional dual-capacitor cascaded converter.
FIG. 3 is a block circuit diagram of a cascaded converter according to a first embodiment of the present disclosure.
FIG. 4A is a schematic signal waveform diagram of delivering energy from a first capacitor to a second capacitor according to the cascaded converter shown in FIG. 3 of the present disclosure.
FIG. 4B is a schematic signal waveform diagram of delivering energy from the second capacitor to the first capacitor according to the cascaded converter shown in FIG. 3 of the present disclosure.
FIG. 4C is a schematic signal waveform diagram of delivering energy from a third capacitor to a fourth capacitor according to the cascaded converter shown in FIG. 3 of the present disclosure.
FIG. 4D is a schematic signal waveform diagram of delivering energy from the fourth capacitor to the third capacitor according to the cascaded converter shown in FIG. 3 of the present disclosure.
FIG. 4E is a schematic signal waveform diagram of delivering energy from the second capacitor to the third capacitor according to the cascaded converter shown in FIG. 3 of the present disclosure.
FIG. 4F is a schematic signal waveform diagram of delivering energy from the third capacitor to the second capacitor according to the cascaded converter shown in FIG. 3 of the present disclosure.
FIG. 4G is a schematic signal waveform diagram of delivering energy from the second capacitor to the third capacitor according to the cascaded converter shown in FIG. 7 of the present disclosure.
FIG. 4H is a schematic signal waveform diagram of delivering energy from the third capacitor to the second capacitor according to the cascaded converter shown in FIG. 7 of the present disclosure.
FIG. 5A is a schematic diagram of a first energy-storing operation according to the cascaded converter shown in FIG. 3 of the present disclosure.
FIG. 5B is a schematic diagram of a first energy-releasing operation according to the cascaded converter shown in FIG. 3 of the present disclosure.
FIG. 5C is a schematic diagram of a second energy-storing operation according to the cascaded converter shown in FIG. 3 of the present disclosure.
FIG. 5D is a schematic diagram of a second energy-releasing operation according to the cascaded converter shown in FIG. 3 of the present disclosure.
FIG. 5E is a schematic diagram of a third energy-storing operation according to the cascaded converter shown in FIG. 3 of the present disclosure.
FIG. 5F is a schematic diagram of a third energy-releasing operation according to the cascaded converter shown in FIG. 3 of the present disclosure.
FIG. 5G is a schematic diagram of a fourth energy-storing operation according to the cascaded converter shown in FIG. 3 of the present disclosure.
FIG. 5H is a schematic diagram of a fourth energy-releasing operation according to the cascaded converter shown in FIG. 3 of the present disclosure.
FIG. 6A is a schematic diagram of a fifth energy-storing operation according to the cascaded converter shown in FIG. 3 of the present disclosure.
FIG. 6B is a schematic diagram of a fifth energy-releasing operation according to the cascaded converter shown in FIG. 3 of the present disclosure.
FIG. 6C is a schematic diagram of a sixth energy-storing operation according to the cascaded converter shown in FIG. 3 of the present disclosure.
FIG. 6D is a schematic diagram of a sixth energy-releasing operation according to the cascaded converter shown in FIG. 3 of the present disclosure.
FIG. 7 is a block circuit diagram of the cascaded converter according to a second embodiment of the present disclosure.
FIG. 8A is a schematic diagram of a seventh energy-storing operation according to the cascaded converter shown in FIG. 7 of the present disclosure.
FIG. 8B is a schematic diagram of a seventh energy-releasing operation according to the cascaded converter shown in FIG. 7 of the present disclosure.
FIG. 8C is a schematic diagram of an eighth energy-storing operation according to the cascaded converter shown in FIG. 7 of the present disclosure.
FIG. 8D is a schematic diagram of an eighth energy-releasing operation according to the cascaded converter shown in FIG. 7 of the present disclosure.

### DETAILED DESCRIPTION

Reference will now be made to the drawing figures to describe the present disclosure in detail. It will be understood that the drawing figures and exemplified embodiments of present disclosure are not limited to the details thereof.

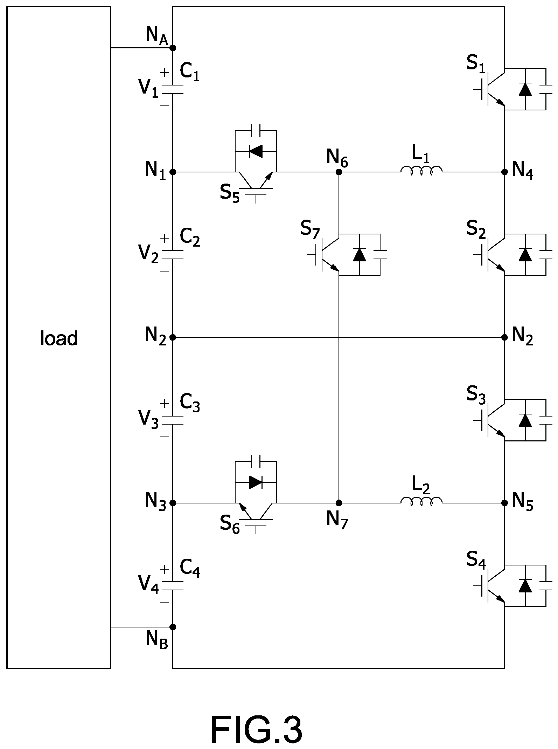

Please refer to FIG. 3, which shows a block circuit diagram of a cascaded converter according to a first embodiment of the present disclosure. The cascaded converter includes four capacitors C₁, C₂, C₃, C₄, four switches S₁, S₂, S₃, S₄, a fifth switch S₅ and a first inductor L₁, a sixth switch S₆ and a second inductor L₂, and a seventh switch S₇.

The four capacitors C₁, C₂, C₃, C₄ include a first capacitor C₁, a second capacitor C₂, a third capacitor C₃, and a fourth capacitor C₄. The first capacitor C₁ and the second capacitor C₂ are jointly connected at a first node N₁. The second capacitor C₂ and the third capacitor C₃ are jointly connected at a second node N₂. The third capacitor C₃ and the fourth capacitor C₄ are jointly connected at a third node N₃. The first capacitor C₁ is further connected to a first voltage node N_{A}, and the fourth capacitor C₄ is further connected to a second voltage node N_{B}.

The four switches S₁, S₂, S₃, S₄ include a first switch S₁, a second switch S₂, a third switch S₃, and a fourth switch S₄. The first switch S₁ and the second switch S₂ are jointly connected at a fourth node N₄. The second switch S₂ and the third switch S₃ are jointly connected at the second node N₂. The third switch S₃ and the fourth switch S₄ are jointly connected at a fifth node N₅. The first switch S₁ is further connected to the first voltage node N_{A}, and the fourth switch S₄ is further connected to the second voltage node N_{B}.

The fifth switch S₅ and the first inductor L₁ are jointly connected at a sixth node N₆, and the fifth switch S₅ is further connected to the first node N₁, the first inductor L₁ is further connected to the fourth node N₄. The sixth switch S₆ and the second inductor L₂ are jointly connected at a seventh node N₇, and the sixth switch S₆ is further connected to the third node N₃, the second inductor L₂ is further connected to the fifth node N₅. The seventh switch S₇ is connected between the sixth node N₆ and the seventh node N₇.

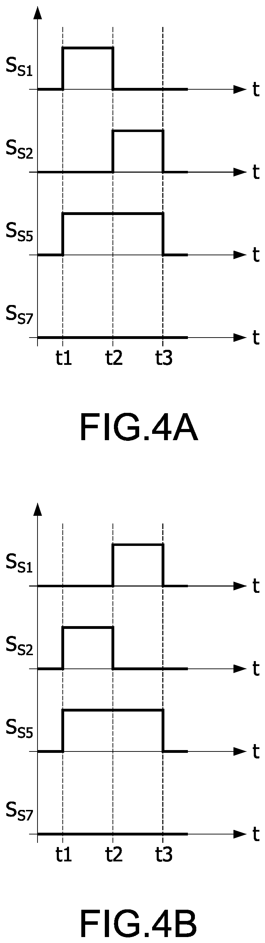

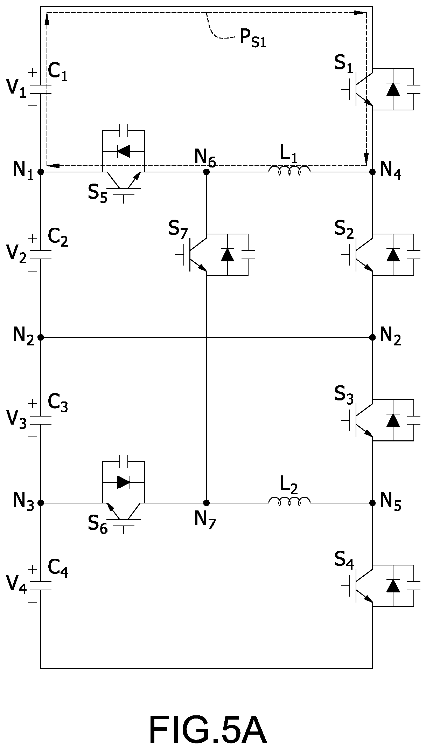

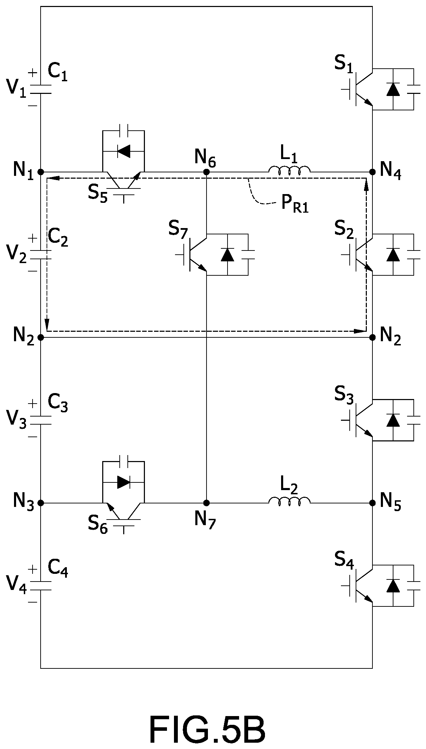

Please refer to FIG. 4A, which shows a schematic signal waveform diagram of delivering energy from a first capacitor to a second capacitor according to the cascaded converter shown in FIG. 3 of the present disclosure; please refer to FIG. 5A, which shows a schematic diagram of a first energy-storing operation according to the cascaded converter shown in FIG. 3 of the present disclosure; please refer to FIG. 5B, which shows a schematic diagram of a first energy-releasing operation according to the cascaded converter shown in FIG. 3 of the present disclosure. As shown in FIG. 4A, during a first time period (i.e., between time t1 and time t2), the first switch S₁ is turned on, the second switch S₂ is turned off, the fifth switch S₅ is turned on, and the seventh switch S₇ is turned off so that a first voltage V₁ built on the first capacitor C₁ stores energy in the first inductor L₁. As shown in FIG. 5A, when the first switch S₁ is turned on and the fifth switch S₅ is turned on, the first voltage V₁ built on the first capacitor C₁ stores energy in the first inductor L₁ through a first energy-storing path P_{S1}. In particular, the first energy-storing path P_{S1} is a path formed by the first capacitor C₁, the first switch S₁, the first inductor L₁, and the fifth switch S₅.

During a second time period (i.e., between time t2 and time t3) subsequent to the first time period, the first switch S₁ is turned off, the second switch S₂ is turned on, the fifth switch S₅ is turned on, and the seventh switch S₇ is turned off so that the first inductor L₁ releases energy to the second capacitor C₂ to build a second voltage V₂. As shown in FIG. 5B, when the second switch S₂ is turned on and the fifth switch S₅ is turned on (i.e., the first switch S₁ is from turned on to turned off, and the second switch S₂ is from turned off to turned on), the first inductor L₁ releases energy to the second capacitor C₂ to build a second voltage V₂ through a first energy-releasing path P_{R1}. In particular, the first energy-releasing path P_{R1} is a path formed by the first inductor L₁, the fifth switch S₅, the second capacitor C₂, and the second switch S₂.

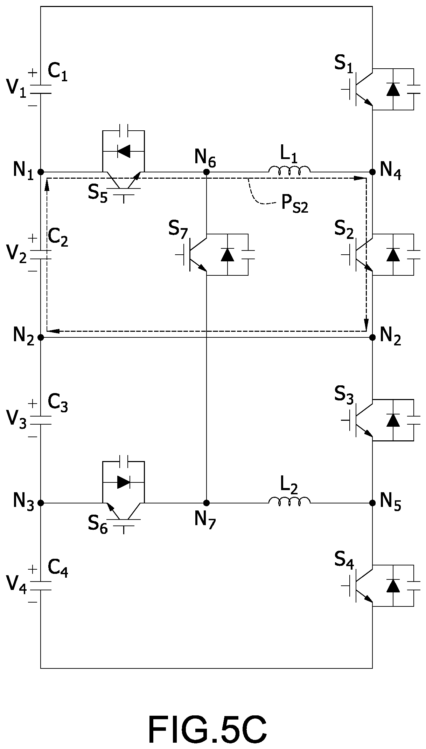

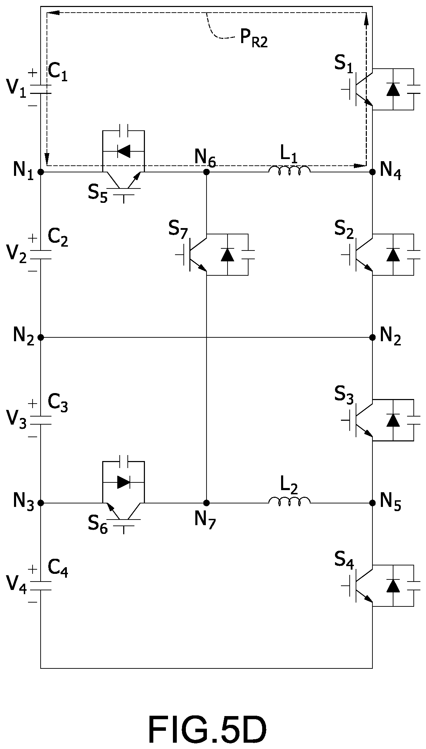

Please refer to FIG. 4B, which shows a schematic signal waveform diagram of delivering energy from the second capacitor to the first capacitor according to the cascaded converter shown in FIG. 3 of the present disclosure; please refer to FIG. 5C, which shows a schematic diagram of a second energy-storing operation according to the cascaded converter shown in FIG. 3 of the present disclosure; please refer to FIG. 5D, which shows a schematic diagram of a second energy-releasing operation according to the cascaded converter shown in FIG. 3 of the present disclosure. As shown in FIG. 4B, during a first time period (i.e., between time t1 and time t2), the first switch S₁ is turned off, the second switch S₂ is turned on, the fifth switch S₅ is turned on, and the seventh switch S₇ is turned off so that a first voltage V₁ built on the first capacitor C₁ stores energy in the first inductor L₁. As shown in FIG. 5C, when the second switch S₂ is turned on and the fifth switch S₅ is turned on, the second voltage V₂ built on the second capacitor C₂ stores energy in the first inductor L₁ through a second energy-storing path P_{S2}. In particular, the second energy-storing path P_{S2} is a path formed by the second capacitor C₂, the fifth switch S₅, the first inductor L₁, and the second switch S₂.

During a second time period (i.e., between time t2 and time t3) subsequent to the first time period, the first switch S₁ is turned on, the second switch S₂ is turned off, the fifth switch S₅ is turned on, and the seventh switch S₇ is turned off so that the first inductor L₁ releases energy to the first capacitor C₁ to build a first voltage V₁. As shown in FIG. 5D, when the first switch S₁ is turned on and the fifth switch S₅ is turned on (i.e., the first switch S₁ is from turned off to turned on, and the second switch S₂ is from turned on to turned off), the first inductor L₁ releases energy to the first capacitor C₁ to build a first voltage V₁ through a second energy-releasing path P_{R2}. In particular, the second energy-releasing path P_{R2} is a path formed by the first inductor L₁, the first switch S₁, the first capacitor C₁, and the fifth switch S₅.

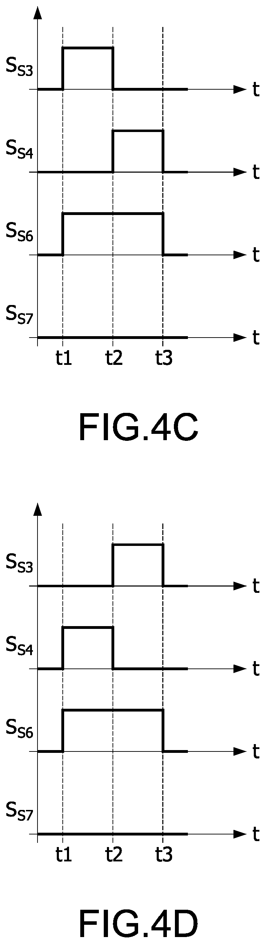

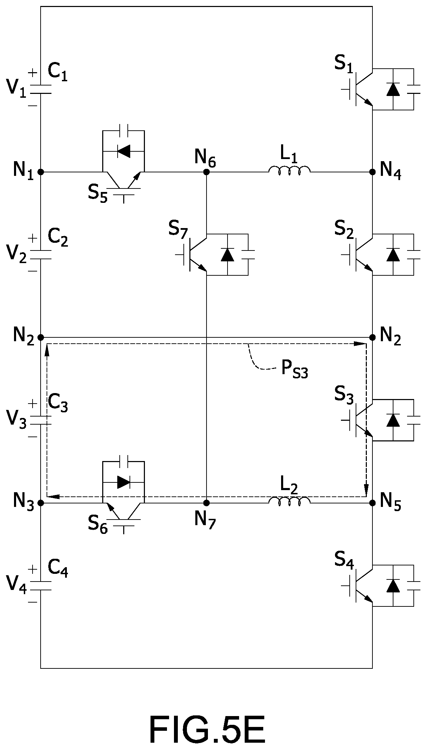

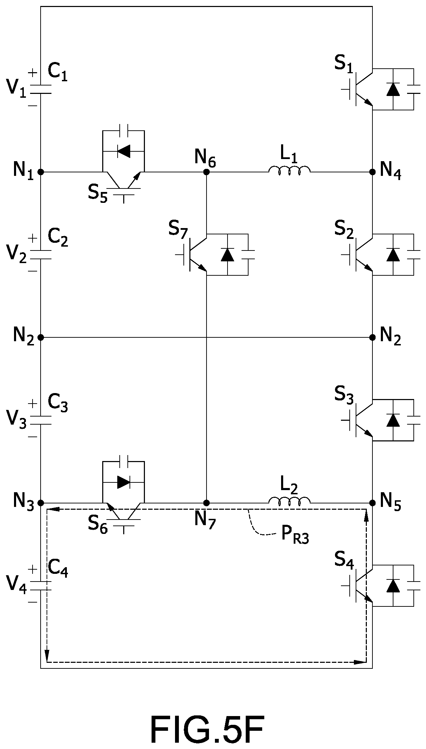

Please refer to FIG. 4C, which shows a schematic signal waveform diagram of delivering energy from a third capacitor to a fourth capacitor according to the cascaded converter shown in FIG. 3 of the present disclosure; please refer to FIG. 5E, which shows a schematic diagram of a third energy-storing operation according to the cascaded converter shown in FIG. 3 of the present disclosure; please refer to FIG. 5F, which shows a schematic diagram of a third energy-releasing operation according to the cascaded converter shown in FIG. 3 of the present disclosure. As shown in FIG. 4C, during a first time period (i.e., between time t1 and time t2), the third switch S₃ is turned on, the fourth switch S₄ is turned off, the sixth switch S₆ is turned on, and the seventh switch S₇ is turned off so that a third voltage V₃ built on the third capacitor C₃ stores energy in the second inductor L₂. As shown in FIG. 5E, when the third switch S₃ is turned on and the sixth switch S₆ is turned on, the third voltage V₃ built on the third capacitor C₃ stores energy in the second inductor L₂ through a third energy-storing path P_{S3}. In particular, the third energy-storing path P_{S3} is a path formed by the third capacitor C₃, the third switch S₃, the second inductor L₂, and the sixth switch S₆.

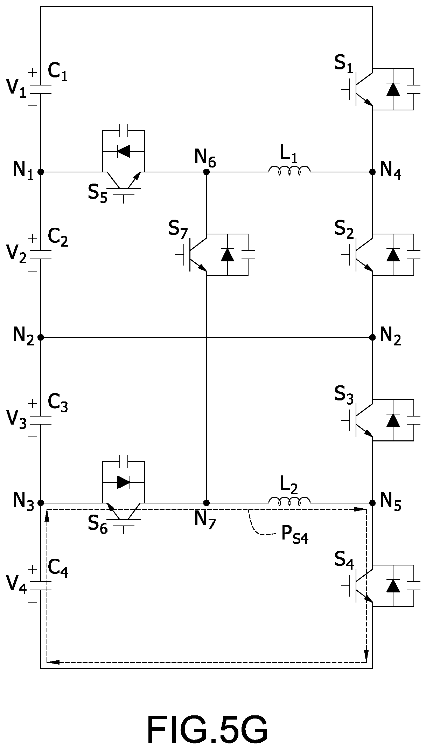

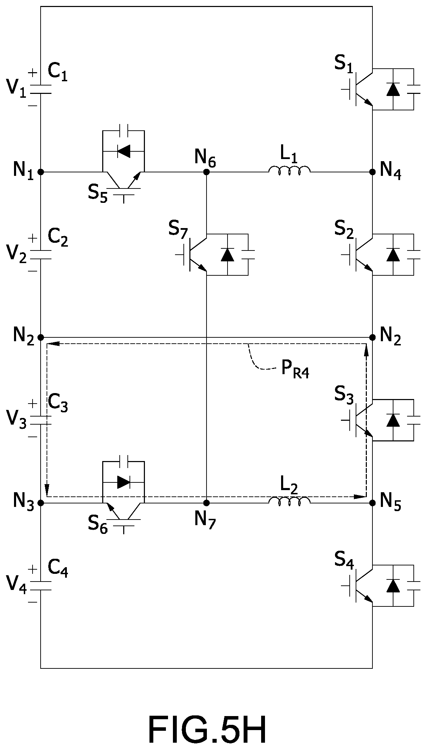

During a second time period (i.e., between time t2 and time t3) subsequent to the first time period, the third switch S₃ is turned off, the fourth switch S₄ is turned on, the sixth switch S₆ is turned on, and the seventh switch S₇ is turned off so that the second inductor L₂ releases energy to the fourth capacitor C₄ to build a fourth voltage V₄. As shown in FIG. 5F, when the fourth switch S₄ is turned on and the sixth switch S₆ is turned on (i.e., the third switch S₃ is from turned on to turned off, and the fourth switch S₄ is from turned off to turned on), the second inductor L₂ releases energy to the fourth capacitor C₄ to build a fourth voltage V₄ through a third energy-releasing path P_{R3}. In particular, the third energy-releasing path P_{R3} is a path formed by the second inductor L₂, the sixth switch S₆, the fourth capacitor C₄, and the fourth switch S₄. Please refer to FIG. 4D, which shows a schematic signal waveform diagram of delivering energy from the fourth capacitor to the third capacitor according to the cascaded converter shown in FIG. 3 of the present disclosure; please refer to FIG. 5G, which shows a schematic diagram of a fourth energy-storing operation according to the cascaded converter shown in FIG. 3 of the present disclosure; please refer to FIG. 5H, which shows a schematic diagram of a fourth energy-releasing operation according to the cascaded converter shown in FIG. 3 of the present disclosure. As shown in FIG. 4D, during a first time period (i.e., between time t1 and time t2), the third switch S₃ is turned off, the fourth switch S₄ is turned on, the sixth switch S₆ is turned on, and the seventh switch S₇ is turned off so that a fourth voltage V₄ built on the fourth capacitor C₄ stores energy in the second inductor L₂. As shown in FIG. 5G, when the fourth switch S₄ is turned on and the sixth switch S₆ is turned on, the fourth voltage V₄ built on the fourth capacitor C₄ stores energy in the second inductor L₂ through a fourth energy-storing path P_{S4}. In particular, the fourth energy-storing path P_{S4} is a path formed by the fourth capacitor C₄, the sixth switch S₆, the second inductor L₂, and the fourth switch S₄.

During a second time period (i.e., between time t2 and time t3) subsequent to the first time period, the third switch S₃ is turned on, the fourth switch S₄ is turned off, the sixth switch S₆ is turned on, and the seventh switch S₇ is turned off so that the second inductor L₂ releases energy to the third capacitor C₃ to build a third voltage V₃. As shown in FIG. 5H, when the third switch S₃ is turned on and the sixth switch S₆ is turned on (i.e., the third switch S₃ is from turned off to turned on, and the fourth switch S₄ is from turned on to turned off), the second inductor L₂ releases energy to the third capacitor C₃ to build a third voltage V₃ through a fourth energy-releasing path P_{R4}. In particular, the fourth energy-releasing path P_{R4} is a path formed by the second inductor L₂, the third switch S₃, the third capacitor C₃, and the sixth switch S₆.

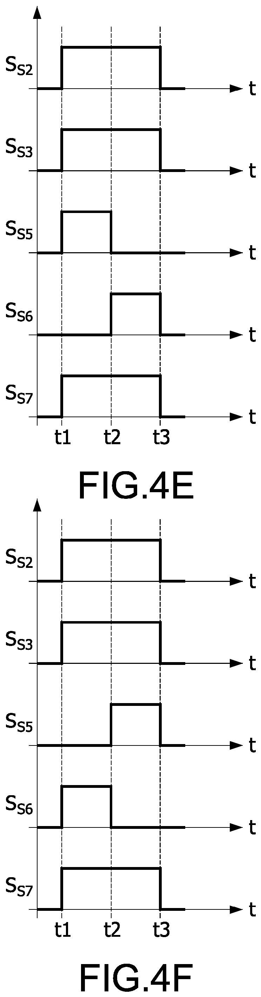

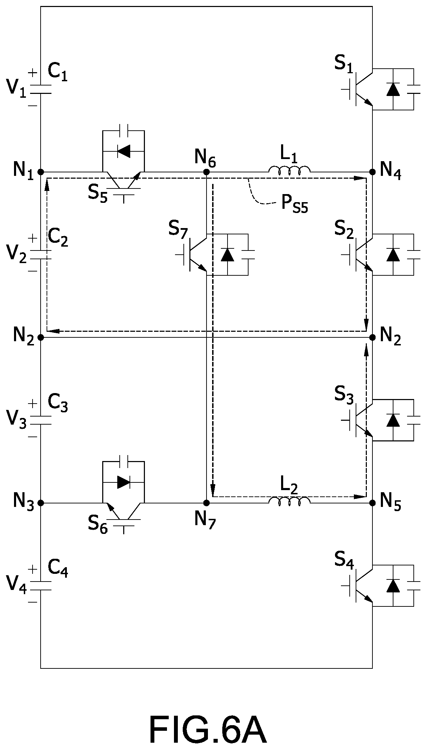

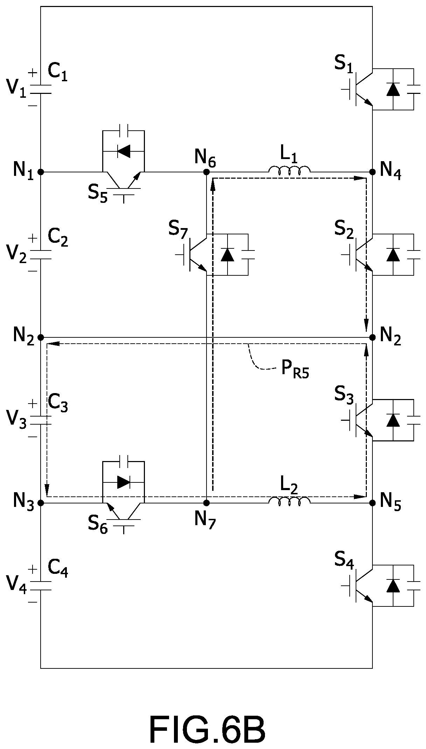

Please refer to FIG. 4E, which shows a schematic signal waveform diagram of delivering energy from the second capacitor to the third capacitor according to the cascaded converter shown in FIG. 3 of the present disclosure; please refer to FIG. 6A, which shows a schematic diagram of a fifth energy-storing operation according to the cascaded converter shown in FIG. 3 of the present disclosure; please refer to FIG. 6B, which shows a schematic diagram of a fifth energy-releasing operation according to the cascaded converter shown in FIG. 3 of the present disclosure. As shown in FIG. 4E, during a first time period (i.e., between time t1 and time t2), the second switch S₂ is turned on, the third switch S₃ is turned on, the fifth switch S₅ is turned on, the sixth switch S₆ is turned off, and the seventh switch S₇ is turned on so that a second voltage V₂ built on the second capacitor C₂ stores energy in the first inductor L₁ and the second inductor L₂. As shown in FIG. 6A, when the second switch S₂ is turned on, the third switch S₃ is turned on, the fifth switch S₅ is turned on, and the seventh switch S₇ is turned on, the second voltage V₂ built on the second capacitor C₂ stores energy in the first inductor L₁ and the second inductor L₂ through a fifth energy-storing path Pss. In particular, the fifth energy-storing path P_{S5} is a path formed by the second capacitor C₂, the fifth switch S₅, the first inductor L₁, and the second switch S₂, and further by the second capacitor C₂, the fifth switch S₅, the seventh switch S₇, the second inductor L₂, and the third switch S₃.

During a second time period (i.e., between time t2 and time t3) subsequent to the first time period, the second switch S₂ is turned on, the third switch S₃ is turned on, the fifth switch S₅ is turned off, the sixth switch S₆ is turned on, and the seventh switch S₇ is turned on so that the first inductor L₁ and the second inductor L₂ release energy to the third capacitor C₃ to build a third voltage V₃. As shown in FIG. 6B, when the second switch S₂ is turned on, the third switch S₃ is turned on, the sixth switch S₆ is turned on, and the seventh switch S₇ is turned on (i.e., the fifth switch S₅ is from turned on to turned off, and the sixth switch S₆ is from turned off to turned on), the first inductor L₁ and the second inductor L₂ release energy to the third capacitor C₃ to build a third voltage V₃ through a fifth energy-releasing path P_{R5}. In particular, the fifth energy-releasing path P_{R5} is a path formed by the first inductor L₁, the second switch S₂, the third capacitor C₃, the sixth switch S₆, and the seventh switch S₇, and further by the second inductor L₂, the third switch S₃, the third capacitor C₃, and the sixth switch S₆.

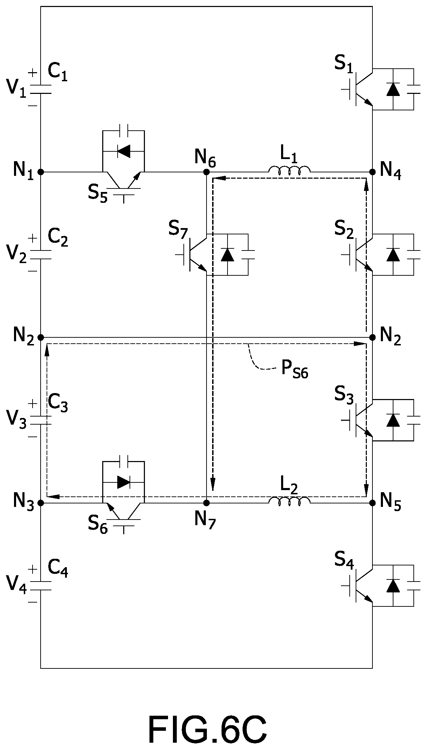

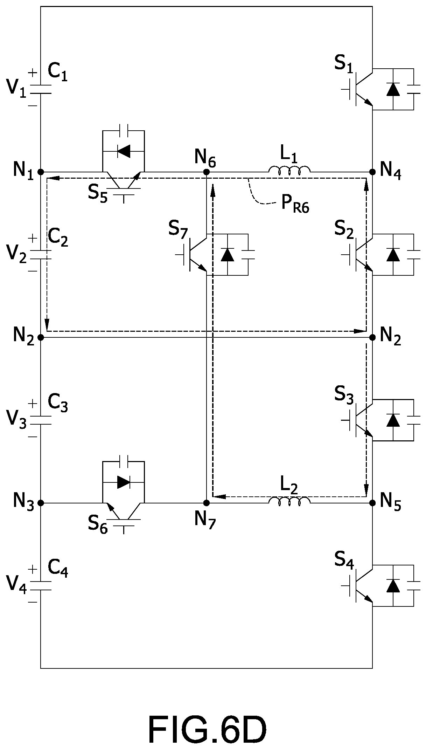

Please refer to FIG. 4F, which shows a schematic signal waveform diagram of delivering energy from the third capacitor to the second capacitor according to the cascaded converter shown in FIG. 3 of the present disclosure; please refer to FIG. 6C, which shows a schematic diagram of a sixth energy-storing operation according to the cascaded converter shown in FIG. 3 of the present disclosure; please refer to FIG. 6D, which shows a schematic diagram of a sixth energy-releasing operation according to the cascaded converter shown in FIG. 3 of the present disclosure. As shown in FIG. 4F, during a first time period (i.e., between time t1 and time t2), the second switch S₂ is turned on, the third switch S₃ is turned on, the fifth switch S₅ is turned off, the sixth switch S₆ is turned on, and the seventh switch S₇ is turned on so that a third voltage V₃ built on the third capacitor C₃ stores energy in the first inductor L₁ and the second inductor L₂. As shown in FIG. 6C, when the second switch S₂ is turned on, the third switch S₃ is turned on, the sixth switch S₆ is turned on, and the seventh switch S₇ is turned on, the third voltage V₃ built on the third capacitor C₃ stores energy in the first inductor L₁ and the second inductor L₂ through a sixth energy-storing path P_{S6}. In particular, the sixth energy-storing path P_{S6} is a path formed by the third capacitor C₃, the second switch S₂, the first inductor L₁, the seventh switch S₇, and the sixth switch S₆, and further by the third capacitor C₃, the third switch S₃, the second inductor L₂, and the sixth switch S₆.

During a second time period (i.e., between time t2 and time t3) subsequent to the first time period, the second switch S₂ is turned on, the third switch S₃ is turned on, the fifth switch S₅ is turned on, the sixth switch S₆ is turned off, and the seventh switch S₇ is turned on so that the first inductor L₁ and the second inductor L₂ release energy to the second capacitor C₂ to build a second voltage V₂. As shown in FIG. 6D, when the second switch S₂ is turned on, the third switch S₃ is turned on, the fifth switch S₅ is turned on, and the seventh switch S₇ is turned on (i.e., the fifth switch S₅ is from turned off to turned on, and the sixth switch S₆ is from turned on to turned off), the first inductor L₁ and the second inductor L₂ release energy to the second capacitor C₂ to build a second voltage V₂ through a sixth energy-releasing path P_{R6}. In particular, the sixth energy-releasing path P_{R6} is a path formed by the first inductor L₁, the fifth switch S₅, the second capacitor C₂, and the second switch S₂, and further by the second inductor L₂, the seventh switch S₇, the fifth switch S₅, the second capacitor C₂, and the third switch S₃.

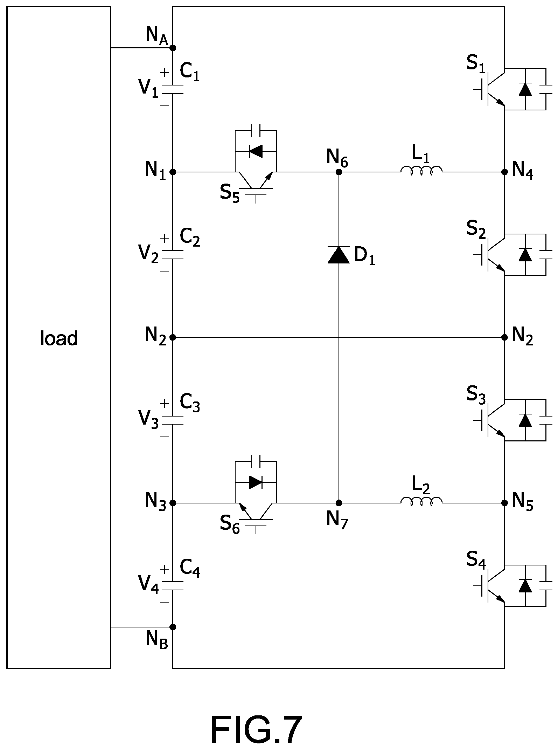

Please refer to FIG. 7, which shows a block circuit diagram of the cascaded converter according to a second embodiment of the present disclosure. The cascaded converter includes four capacitors C₁, C₂, C₃, C₄, four switches S₁, S₂, S₃, S₄, a fifth switch S₅ and a first inductor L₁, a sixth switch S₆ and a second inductor L₂, and a diode D₁. Incidentally, the major difference between the second embodiment shown in FIG. 7 and the first embodiment shown in FIG. 3 is that the seventh switch S₇ is replaced by the diode D₁.

The four capacitors C₁, C₂, C₃, C₄ include a first capacitor C₁, a second capacitor C₂, a third capacitor C₃, and a fourth capacitor C₄. The first capacitor C₁ and the second capacitor C₂ are jointly connected at a first node N₁. The second capacitor C₂ and the third capacitor C₃ are jointly connected at a second node N₂. The third capacitor C₃ and the fourth capacitor C₄ are jointly connected at a third node N₃. The first capacitor C₁ is further connected to a first voltage node N_{A}, and the fourth capacitor C₄ is further connected to a second voltage node N_{B}.

The four switches S₁, S₂, S₃, S₄ include a first switch S₁, a second switch S₂, a third switch S₃, and a fourth switch S₄. The first switch S₁ and the second switch S₂ are jointly connected at a fourth node N₄. The second switch S₂ and the third switch S₃ are jointly connected at the second node N₂. The third switch S₃ and the fourth switch S₄ are jointly connected at a fifth node N₅. The first switch S₁ is further connected to the first voltage node N_{A}, and the fourth switch S₄ is further connected to the second voltage node N_{B}.

The fifth switch S₅ and the first inductor L₁ are jointly connected at a sixth node N₆, and the fifth switch S₅ is further connected to the first node N₁, the first inductor L₁ is further connected to the fourth node N₄. The sixth switch S₆ and the second inductor L₂ are jointly connected at a seventh node N₇, and the sixth switch S₆ is further connected to the third node N₃, the second inductor L₂ is further connected to the fifth node N₅. The diode D₁ has an anode and a cathode, the cathode is connected to the sixth node N₆, and the anode is connected to the seventh node N₇.

Please refer to FIG. 4A, which shows a schematic signal waveform diagram of delivering energy from a first capacitor to a second capacitor according to the cascaded converter shown in FIG. 3 of the present disclosure; please refer to FIG. 5A, which shows a schematic diagram of a first energy-storing operation according to the cascaded converter shown in FIG. 3 of the present disclosure; please refer to FIG. 5B, which shows a schematic diagram of a first energy-releasing operation according to the cascaded converter shown in FIG. 3 of the present disclosure. As mentioned above, the seventh switch S₇ is replaced by the diode D₁ in the second embodiment, and therefore if the control signal S_{S7} that controls the seventh switch S₇ in FIG. 4A is deleted, and the seventh switch S₇ in FIG. 5A and FIG. 5B is changed to the diode D₁ for convenience, it will correspond to the description of this embodiment. As shown in FIG. 4A, during a first time period (i.e., between time t1 and time t2), the first switch S₁ is turned on, the second switch S₂ is turned off, and the fifth switch S₅ is turned on so that a first voltage V₁ built on the first capacitor C₁ stores energy in the first inductor L₁. As shown in FIG. 5A (as mentioned above, the seventh switch S₇ is replaced by the diode D₁), when the first switch S₁ is turned on and the fifth switch S₅ is turned on, the first voltage V₁ built on the first capacitor C₁ stores energy in the first inductor L₁ through a first energy-storing path P_{S1}. In particular, the first energy-storing path P_{S1} is a path formed by the first capacitor C₁, the first switch S₁, the first inductor L₁, and the fifth switch S₅.

During a second time period (i.e., between time t2 and time t3) subsequent to the first time period, the first switch S₁ is turned off, the second switch S₂ is turned on, and the fifth switch S₅ is turned on so that the first inductor L₁ releases energy to the second capacitor C₂ to build a second voltage V₂. As shown in FIG. 5B (as mentioned above, the seventh switch S₇ is replaced by the diode D₁), when the second switch S₂ is turned on and the fifth switch S₅ is turned on (i.e., the first switch S₁ is from turned on to turned off, and the second switch S₂ is from turned off to turned on), the first inductor L₁ releases energy to the second capacitor C₂ to build a second voltage V₂ through a first energy-releasing path P_{R1}. In particular, the first energy-releasing path P_{R1} is a path formed by the first inductor L₁, the fifth switch S₅, the second capacitor C₂, and the second switch S₂.

Please refer to FIG. 4B, which shows a schematic signal waveform diagram of delivering energy from the second capacitor to the first capacitor according to the cascaded converter shown in FIG. 3 of the present disclosure; please refer to FIG. 5C, which shows a schematic diagram of a second energy-storing operation according to the cascaded converter shown in FIG. 3 of the present disclosure; please refer to FIG. 5D, which shows a schematic diagram of a second energy-releasing operation according to the cascaded converter shown in FIG. 3 of the present disclosure. Similarly, the seventh switch S₇ is replaced by the diode D₁ in the second embodiment, and therefore if the control signal S_{S7} that controls the seventh switch S₇ in FIG. 4B is deleted, and the seventh switch S₇ in FIG. 5C and FIG. 5D is changed to the diode D₁ for convenience, it will correspond to the description of this embodiment. As shown in FIG. 4B, during a first time period (i.e., between time t1 and time t2), the first switch S₁ is turned off, the second switch S₂ is turned on, and the fifth switch S₅ is turned on so that a first voltage V₁ built on the first capacitor C₁ stores energy in the first inductor L₁. As shown in FIG. 5C (as mentioned above, the seventh switch S₇ is replaced by the diode D₁), when the second switch S₂ is turned on and the fifth switch S₅ is turned on, the second voltage V₂ built on the second capacitor C₂ stores energy in the first inductor L₁ through a second energy-storing path P_{S2}. In particular, the second energy-storing path P_{S2} is a path formed by the second capacitor C₂, the fifth switch S₅, the first inductor L₁, and the second switch S₂.

During a second time period (i.e., between time t2 and time t3) subsequent to the first time period, the first switch S₁ is turned on, the second switch S₂ is turned off, and the fifth switch S₅ is turned on so that the first inductor L₁ releases energy to the first capacitor C₁ to build a first voltage V₁. As shown in FIG. 5D (as mentioned above, the seventh switch S₇ is replaced by the diode D₁), when the first switch S₁ is turned on and the fifth switch S₅ is turned on (i.e., the first switch S₁ is from turned off to turned on, and the second switch S₂ is from turned on to turned off), the first inductor L₁ releases energy to the first capacitor C₁ to build a first voltage V₁ through a second energy-releasing path P_{R2}. In particular, the second energy-releasing path P_{R2} is a path formed by the first inductor L₁, the first switch S₁, the first capacitor C₁, and the fifth switch S₅.

Please refer to FIG. 4C, which shows a schematic signal waveform diagram of delivering energy from a third capacitor to a fourth capacitor according to the cascaded converter shown in FIG. 3 of the present disclosure; please refer to FIG. 5E, which shows a schematic diagram of a third energy-storing operation according to the cascaded converter shown in FIG. 3 of the present disclosure; please refer to FIG. 5F, which shows a schematic diagram of a third energy-releasing operation according to the cascaded converter shown in FIG. 3 of the present disclosure. Similarly, the seventh switch S₇ is replaced by the diode D₁ in the second embodiment, and therefore if the control signal S_{S7} that controls the seventh switch S₇ in FIG. 4C is deleted, and the seventh switch S₇ in FIG. 5E and FIG. 5F is changed to the diode D₁ for convenience, it will correspond to the description of this embodiment. As shown in FIG. 4C, during a first time period (i.e., between time t1 and time t2), the third switch S₃ is turned on, the fourth switch S₄ is turned off, and the sixth switch S₆ is turned on so that a third voltage V₃ built on the third capacitor C₃ stores energy in the second inductor L₂. As shown in FIG. 5E (as mentioned above, the seventh switch S₇ is replaced by the diode D₁), when the third switch S₃ is turned on and the sixth switch S₆ is turned on, the third voltage V₃ built on the third capacitor C₃ stores energy in the second inductor L₂ through a third energy-storing path P_{S3}. In particular, the third energy-storing path P_{S3} is a path formed by the third capacitor C₃, the third switch S₃, the second inductor L₂, and the sixth switch S₆.

During a second time period (i.e., between time t2 and time t3) subsequent to the first time period, the third switch S₃ is turned off, the fourth switch S₄ is turned on, and the sixth switch S₆ is turned on so that the second inductor L₂ releases energy to the fourth capacitor C₄ to build a fourth voltage V₄. As shown in FIG. 5F (as mentioned above, the seventh switch S₇ is replaced by the diode D₁), when the fourth switch S₄ is turned on and the sixth switch S₆ is turned on (i.e., the third switch S₃ is from turned on to turned off, and the fourth switch S₄ is from turned off to turned on), the second inductor L₂ releases energy to the fourth capacitor C₄ to build a fourth voltage V₄ through a third energy-releasing path P_{R3}. In particular, the third energy-releasing path P_{R3} is a path formed by the second inductor L₂, the sixth switch S₆, the fourth capacitor C₄, and the fourth switch S₄.

Please refer to FIG. 4D, which shows a schematic signal waveform diagram of delivering energy from the fourth capacitor to the third capacitor according to the cascaded converter shown in FIG. 3 of the present disclosure; please refer to FIG. 5G, which shows a schematic diagram of a fourth energy-storing operation according to the cascaded converter shown in FIG. 3 of the present disclosure; please refer to FIG. 5H, which shows a schematic diagram of a fourth energy-releasing operation according to the cascaded converter shown in FIG. 3 of the present disclosure. Similarly, the seventh switch S₇ is replaced by the diode D₁ in the second embodiment, and therefore if the control signal S_{S7} that controls the seventh switch S₇ in FIG. 4D is deleted, and the seventh switch S₇ in FIG. 5G and FIG. 5H is changed to the diode D₁ for convenience, it will correspond to the description of this embodiment. As shown in FIG. 4D, during a first time period (i.e., between time t1 and time t2), the third switch S₃ is turned off, the fourth switch S₄ is turned on, and the sixth switch S₆ is turned on so that a fourth voltage V₄ built on the fourth capacitor C₄ stores energy in the second inductor L₂. As shown in FIG. 5G (as mentioned above, the seventh switch S₇ is replaced by the diode D₁), when the fourth switch S₄ is turned on and the sixth switch S₆ is turned on, the fourth voltage V₄ built on the fourth capacitor C₄ stores energy in the second inductor L₂ through a fourth energy-storing path P_{S4}. In particular, the fourth energy-storing path P_{S4} is a path formed by the fourth capacitor C₄, the sixth switch S₆, the second inductor L₂, and the fourth switch S₄.

During a second time period (i.e., between time t2 and time t3) subsequent to the first time period, the third switch S₃ is turned on, the fourth switch S₄ is turned off, and the sixth switch S₆ is turned on so that the second inductor L₂ releases energy to the third capacitor C₃ to build a third voltage V₃. As shown in FIG. 5H (as mentioned above, the seventh switch S₇ is replaced by the diode D₁), when the third switch S₃ is turned on and the sixth switch S₆ is turned on (i.e., the third switch S₃ is from turned off to turned on, and the fourth switch S₄ is from turned on to turned off), the second inductor L₂ releases energy to the third capacitor C₃ to build a third voltage V₃ through a fourth energy-releasing path P_{R4}. In particular, the fourth energy-releasing path P_{R4} is a path formed by the second inductor L₂, the third switch S₃, the third capacitor C₃, and the sixth switch S₆.

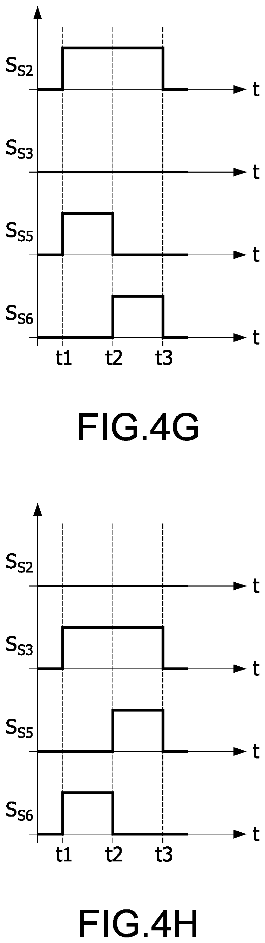

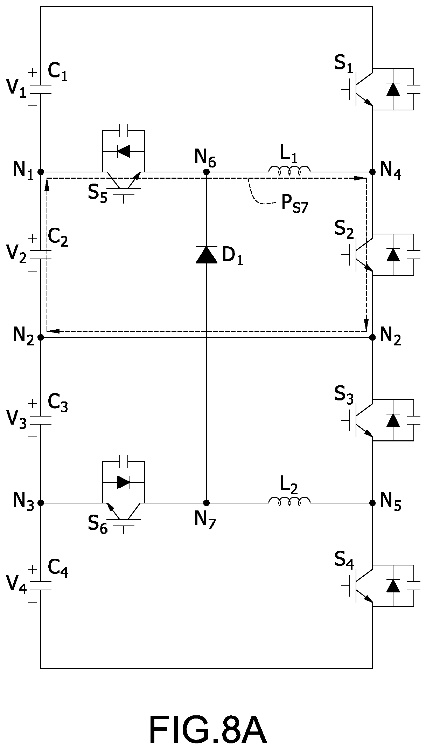

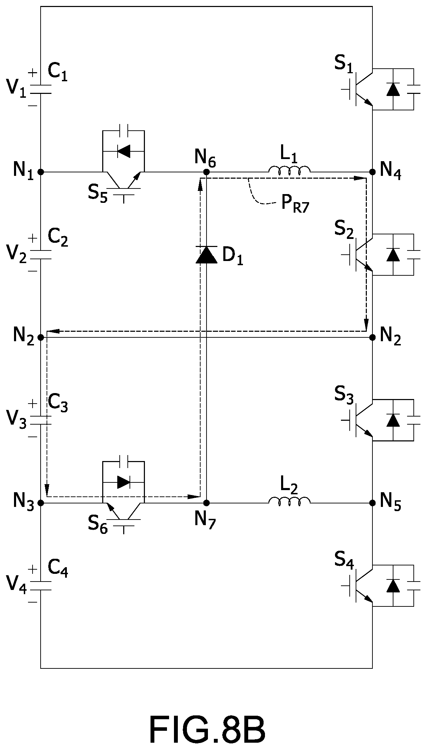

Please refer to FIG. 4G, which shows a schematic signal waveform diagram of delivering energy from the second capacitor to the third capacitor according to the cascaded converter shown in FIG. 7 of the present disclosure; please refer to FIG. 8A, which shows a schematic diagram of a seventh energy-storing operation according to the cascaded converter shown in FIG. 7 of the present disclosure; please refer to FIG. 8B, which shows a schematic diagram of a seventh energy-releasing operation according to the cascaded converter shown in FIG. 7 of the present disclosure. As shown in FIG. 4G, during a first time period (i.e., between time t1 and time t2), the second switch S₂ is turned on, the third switch S₃ is turned off, the fifth switch S₅ is turned on, and the sixth switch S₆ is turned off so that a second voltage V₂ built on the second capacitor C₂ stores energy in the first inductor L₁. As shown in FIG. 8A, when the second switch S₂ is turned on and the fifth switch S₅ is turned on, the second voltage V₂ built on the second capacitor C₂ stores energy in the first inductor L₁ through a seventh energy-storing path P_{S7}. In particular, the seventh energy-storing path P_{S7} is a path formed by the second capacitor C₂, the fifth switch S₅, the first inductor L₁, and the second switch S₂.

During a second time period (i.e., between time t2 and time t3) subsequent to the first time period, the second switch S₂ is turned on, the third switch S₃ is turned off, the fifth switch S₅ is turned off, and the sixth switch S₆ is turned on so that the first inductor L₁ releases energy to the third capacitor C₃ to build a third voltage V₃. As shown in FIG. 8B, when the second switch S₂ is turned on and the sixth switch S₆ is turned on (i.e., the fifth switch S₅ is from turned on to turned off, and the sixth switch S₆ is from turned off to turned on), the first inductor L₁ releases energy to the third capacitor C₃ to build a third voltage V₃ through a seventh energy-releasing path P_{R7}. In particular, the seventh energy-releasing path P_{R7} is a path formed by the first inductor L₁, the second switch S₂, the third capacitor C₃, and the sixth switch S₆.

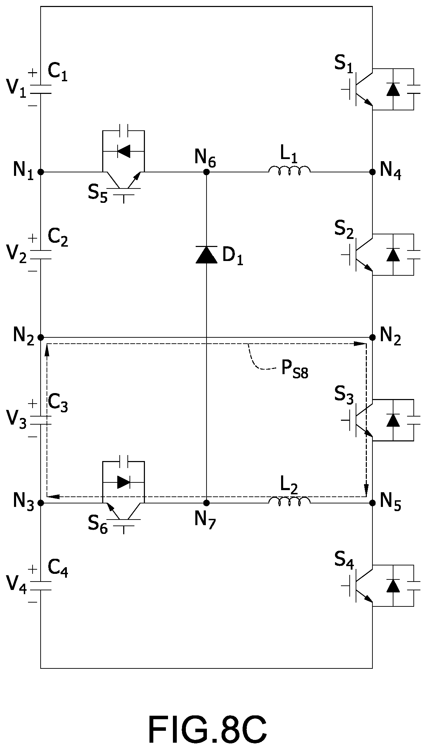

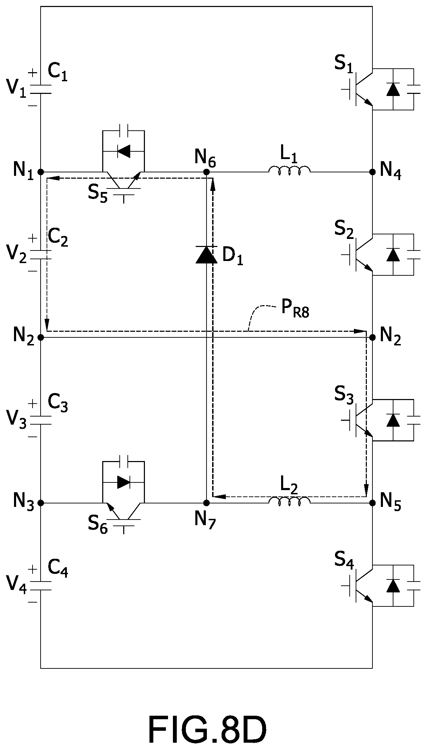

Please refer to FIG. 4H, which shows a schematic signal waveform diagram of delivering energy from the third capacitor to the second capacitor according to the cascaded converter shown in FIG. 7 of the present disclosure; please refer to FIG. 8C, which shows a schematic diagram of an eighth energy-storing operation according to the cascaded converter shown in FIG. 7 of the present disclosure; please refer to FIG. 8D, which shows a schematic diagram of an eighth energy-releasing operation according to the cascaded converter shown in FIG. 7 of the present disclosure. As shown in FIG. 4H, during a first time period (i.e., between time t1 and time t2), the second switch S₂ is turned off, the third switch S₃ is turned on, the fifth switch S₅ is turned off, and the sixth switch S₆ is turned on so that a third voltage V₃ built on the third capacitor C₃ stores energy in the second inductor L₂. As shown in FIG. 8C, when the third switch S₃ is turned on and the sixth switch S₆ is turned on, the third voltage V₃ built on the third capacitor C₃ stores energy in the second inductor L₂ through an eighth energy-storing path P_{S8}. In particular, the eighth energy-storing path P_{S8} is a path formed by the third capacitor C₃, the third switch S₃, the second inductor L₁, and the sixth d switch S₆.

During a second time period (i.e., between time t2 and time t3) subsequent to the first time period, the second switch S₂ is turned off, the third switch S₃ is turned on, the fifth switch S₅ is turned on, and the sixth switch S₆ is turned off so that the second inductor L₂ releases energy to the second capacitor C₂ to build a second voltage V₂. As shown in FIG. 8D, when the third switch S₃ is turned on and the fifth switch S₅ is turned on (i.e., the fifth switch S₅ is from turned off to turned on, and the sixth switch S₆ is from turned on to turned off), the second inductor L₂ releases energy to the second capacitor C₂ to build a second voltage V₂ through an eighth energy-releasing path P_{R8}. In particular, the eighth energy-releasing path P_{R8} is a path formed by the second inductor L₂, the diode D₁, the fifth switch S₅, the second capacitor C₂, and the third switch S₃.

In summary, the present disclosure has the following features and advantages: the cascaded converter provided by the present disclosure only requires seven switches S₁-S₇ and two inductors L₁, L₂ to control four voltages V₁-V₄ of four capacitors, and further two inductors L₁, L₂ are used in parallel to control the capacitor voltages V₂, V₃ to achieve the advantages of saving component costs, simple structure and saving space. Therefore, compared with the conventional technology, the cascaded converter of the present disclosure has the characteristics of higher power density.

## Claims

1. A cascaded converter, **characterized in that** the cascaded converter comprising:
four capacitors (C₁, C₂, C₃, C₄), comprising a first capacitor (C₁), a second capacitor (C₂), a third capacitor (C₃), and a fourth capacitor (C₄) connected in series, wherein the first capacitor (C₁) and the second capacitor (C₂) are jointly connected at a first node (N₁), the second capacitor (C₂) and the third capacitor (C₃) are jointly connected at a second node (N₂), the third capacitor (C₃) and the fourth capacitor (C₄) are jointly connected at a third node (N₃), and the first capacitor (C₁) is further connected to a first voltage node (N_{A}), and the fourth capacitor (C₄) is further connected to a second voltage node (N_{B}),
four switches (S₁, S₂, S₃, S₄), comprising a first switch (S₁), a second switch (S₂), a third switch (S₃), and a fourth switch (S₄) connected in series, wherein the first switch (S₁) and the second switch (S₂) are jointly connected at a fourth node (N₄), the second switch (S₂) and the third switch (S₃) are jointly connected at the second node (N₂), the third switch (S₃) and the fourth switch (S₄) are jointly connected at a fifth node (N₅), and the first switch (S₁) is further connected to the first voltage node (N_{A}), and the fourth switch (S₄) is further connected to the second voltage node (N_{B}),
a fifth switch (S₅) and a first inductor (L₁), jointly connected at a sixth node (N₆), and the fifth switch (S₅) further connected to the first node (N₁), the first inductor (L₁) further connected to the fourth node (N₄),
a sixth switch (S₆) and a second inductor (L₂), jointly connected at a seventh node (N₇), and the sixth switch (S₆) further connected to the third node (N₃), the second inductor (L₂) further connected to the fifth node (N₅), and
a seventh switch (S₇), connected between the sixth node (N₆) and the seventh node (N₇).

2. The cascaded converter as claimed in claim 1, wherein during a first time period, the first switch (S₁) is turned on, the second switch (S₂) is turned off, the fifth switch (S₅) is turned on, and the seventh switch (S₇) is turned off so that a first voltage (V₁) built on the first capacitor (C₁) stores energy in the first inductor (L₁),
during a second time period subsequent to the first time period, the first switch (S₁) is turned off, the second switch (S₂) is turned on, the fifth switch (S₅) is turned on, and the seventh switch (S₇) is turned off so that the first inductor (L₁) releases energy to the second capacitor (C₂) to build a second voltage (V₂).

3. The cascaded converter as claimed in claim 1, wherein during a first time period, the first switch (S₁) is turned off, the second switch (S₂) is turned on, the fifth switch (S₅) is turned on, and the seventh switch (S₇) is turned off so that a second voltage (V₂) built on the second capacitor (C₂) stores energy in the first inductor (L₁),
during a second time period subsequent to the first time period, the first switch (S₁) is turned on, the second switch (S₂) is turned off, the fifth switch (S₅) is turned on, and the seventh switch (S₇) is turned off so that the first inductor (L₁) releases energy to the first capacitor (C₁) to build a first voltage (V₁).

4. The cascaded converter as claimed in claim 1, wherein during a first time period, the third switch (S₃) is turned on, the fourth switch (S₄) is turned off, the sixth switch (S₆) is turned on, and the seventh switch (S₇) is turned off so that a third voltage (V₃) built on the third capacitor (C₃) stores energy in the second inductor (L₂),
during a second time period subsequent to the first time period, the third switch (S₃) is turned off, the fourth switch (S₄) is turned on, the sixth switch (S₆) is turned on, and the seventh switch (S₇) is turned off so that the second inductor (L₂) releases energy to the fourth capacitor (C₄) to build a fourth voltage (V₄).

5. The cascaded converter as claimed in claim 1, wherein during a first time period, the third switch (S₃) is turned off, the fourth switch (S₄) is turned on, the sixth switch (S₆) is turned on, and the seventh switch (S₇) is turned off so that a fourth voltage (V₄) built on the fourth capacitor (C₄) stores energy in the second inductor (L₂),
during a second time period subsequent to the first time period, the third switch (S₃) is turned on, the fourth switch (S₄) is turned off, the sixth switch (S₆) is turned on, and the seventh switch (S₇) is turned off so that the second inductor (L₂) releases energy to the third capacitor (C₃) to build a third voltage (V₃).

6. The cascaded converter as claimed in claim 1, wherein during a first time period, the second switch (S₂) is turned on, the third switch (S₃) is turned on, the fifth switch (S₅) is turned on, the sixth switch (S₆) is turned off, and the seventh switch (S₇) is turned on so that a second voltage (V₂) built on the second capacitor (C₂) stores energy in the first inductor (L₁) and in the second inductor (L₂),
during a second time period subsequent to the first time period, the second switch (S₂) is turned on, the third switch (S₃) is turned on, the fifth switch (S₅) is turned off, the sixth switch (S₆) is turned on, and the seventh switch (S₇) is turned on so that the first inductor (L₁) and the second inductor (L₂) release energy to the third capacitor (C₃) to build a third voltage (V₃).

7. The cascaded converter as claimed in claim 1, wherein during a first time period, the second switch (S₂) is turned on, the third switch (S₃) is turned on, the fifth switch (S₅) is turned off, the sixth switch (S₆) is turned on, and the seventh switch (S₇) is turned on so that a third voltage (V₃) built on the third capacitor (C₃) stores energy in the first inductor (L₁) and in the second inductor (L₂),
during a second time period subsequent to the first time period, the second switch (S₂) is turned on, the third switch (S₃) is turned on, the fifth switch (S₅) is turned on, the sixth switch (S₆) is turned off, and the seventh switch (S₇) is turned on so that the first inductor (L₁) and the second inductor (L₂) release energy to the second capacitor (C₂) to build a second voltage (V₂).

8. A cascaded converter, **characterized in that** the cascaded converter comprising:
four capacitors (C₁, C₂, C₃, C₄), comprising a first capacitor (C₁), a second capacitor (C₂), a third capacitor (C₃), and a fourth capacitor (C₄) connected in series, wherein the first capacitor (C₁) and the second capacitor (C₂) are jointly connected at a first node (N₁), the second capacitor (C₂) and the third capacitor (C₃) are jointly connected at a second node (N₂), the third capacitor (C₃) and the fourth capacitor (C₄) are jointly connected at a third node (N₃), and the first capacitor (C₁) is further connected to a first voltage node (N_{A}), and the fourth capacitor (C₄) is further connected to a second voltage node (N_{B}),
four switches (S₁, S₂, S₃, S₄), comprising a first switch (S₁), a second switch (S₂), a third switch (S₃), and a fourth switch (S₄) connected in series, wherein the first switch (S₁) and the second switch (S₂) are jointly connected at a fourth node (N₄), the second switch (S₂) and the third switch (S₃) are jointly connected at the second node (N₂), the third switch (S₃) and the fourth switch (S₄) are jointly connected at a fifth node (N₅), and the first switch (S₁) is further connected to the first voltage node (N_{A}), and the fourth switch (S₄) is further connected to the second voltage node (N_{B}),
a fifth switch (S₅) and a first inductor (L₁), jointly connected at a sixth node (N₆), and the fifth switch (S₅) further connected to the first node (N₁), the first inductor (L₁) further connected to the fourth node (N₄),
a sixth switch (S₆) and a second inductor (L₂), jointly connected at a seventh node (N₇), and the sixth switch (S₆) further connected to the third node (N₃), the second inductor (L₂) further connected to the fifth node (N₅), and
a diode (D₁), comprising an anode and a cathode, the cathode connected to the sixth node (N₆), and the anode connected to the seventh node (N₇).

9. The cascaded converter as claimed in claim 8, wherein during a first time period, the first switch (S₁) is turned on, the second switch (S₂) is turned off, and the fifth switch (S₅) is turned on so that a first voltage (V₁) built on the first capacitor (C₁) stores energy in the first inductor (L₁),
during a second time period subsequent to the first time period, the first switch (S₁) is turned off, the second switch (S₂) is turned on, and the fifth switch (S₅) is turned on so that the first inductor (L₁) releases energy to the second capacitor (C₂) to build a second voltage (V₂).

10. The cascaded converter as claimed in claim 8, wherein during a first time period, the first switch (S₁) is turned off, the second switch (S₂) is turned on, and the fifth switch (S₅) is turned on so that a second voltage (V₂) built on the second capacitor (C₂) stores energy in the first inductor (L₁),
during a second time period subsequent to the first time period, the first switch (S₁) is turned on, the second switch (S₂) is turned off, and the fifth switch (S₅) is turned on so that the first inductor (L₁) releases energy to the first capacitor (C₁) to build a first voltage (V₁).

11. The cascaded converter as claimed in claim 8, wherein during a first time period, the third switch (S₃) is turned on, the fourth switch (S₄) is turned off, and the sixth switch (S₆) is turned on so that a third voltage (V₃) built on the third capacitor (C₃) stores energy in the second inductor (L₂),
during a second time period subsequent to the first time period, the third switch (S₃) is turned off, the fourth switch (S₄) is turned on, and the sixth switch (S₆) is turned on so that the second inductor (L₂) releases energy to the fourth capacitor (C₄) to build a fourth voltage (V₄).

12. The cascaded converter as claimed in claim 8, wherein during a first time period, the third switch (S₃) is turned off, the fourth switch (S₄) is turned on, and the sixth switch (S₆) is turned on so that a fourth voltage (V₄) built on the fourth capacitor (C₄) stores energy in the second inductor (L₂),
during a second time period subsequent to the first time period, the third switch (S₃) is turned on, the fourth switch (S₄) is turned off, and the sixth switch (S₆) is turned on so that the second inductor (L₂) releases energy to the third capacitor (C₃) to build a third voltage (V₃).

13. The cascaded converter as claimed in claim 8, wherein during a first time period, the second switch (S₂) is turned on, the third switch (S₃) is turned off, the fifth switch (S₅) is turned on, and the sixth switch (S₆) is turned off so that a second voltage (V₂) built on the second capacitor (C₂) stores energy in the first inductor (L₁),
during a second time period subsequent to the first time period, the second switch (S₂) is turned on, the third switch (S₃) is turned off, the fifth switch (S₅) is turned off, and the sixth switch (S₆) is turned on so that the first inductor (L₁) releases energy to the third capacitor (C₃) to build a third voltage (V₃).

14. The cascaded converter as claimed in claim 8, wherein during a first time period, the second switch (S₂) is turned off, the third switch (S₃) is turned on, the fifth switch (S₅) is turned off, and the sixth switch (S₆) is turned on so that a third voltage (V₃) built on the third capacitor (C₃) stores energy in the second inductor (L₂),
during a second time period subsequent to the first time period, the second switch (S₂) is turned off, the third switch (S₃) is turned on, the fifth switch (S₅) is turned on, and the sixth switch (S₆) is turned off so that the second inductor (L₂) releases energy to the second capacitor (C₂) to build a second voltage (V₂).
